# FASCICULE DE BREVET EUROPEEN

(11) **EP 1 537 768 B1**
(45) Date de publication et mention de la délivrance du brevet: **13.03.2013**
(21) Numéro de dépôt: 04300829.1
(22) Date de dépôt: 01.12.2004
(51) Int. Cl.: A01C 7/10

(54) **Semoir equipe d'un systeme de comptage de graines**
Sämaschine ausgestattet mit einer Zähleinrichtung
Seeder equiped with a seed counter device

(30) Priorité: 05.12.2003 FR 0314312
(43) Date de publication de la demande: 08.06.2005
(73) Titulaire: KUHN S.A., 67706 Saverne Cedex (FR)
(72) Inventeur: HIRONIMUS, Jeannot, 67440, SCHWEBWILLER (FR)

(56) Documents cités:
- EP-A- 0 829 193
- EP-A- 1 341 122
- DE-A- 10 037 713
- DE-C- 62 541
- GB-A- 2 082 006

## Description

La présente invention se rapporte au domaine technique général du machinisme agricole et en particulier aux machines de distribution. Elle concerne plus particulièrement un semoir selon la revendication 1.

Un tel semoir est connu dans le tirage spécial de Lemken ayant pour titre « **Körner pro Quadratmeter statt Kilogramm pro Hektar** ». Ce semoir comporte d'une manière connue en soi une trémie, un dispositif de dosage, une tête de distribution alimentée à partir du dispositif de dosage au moyen d'un tuyau, plusieurs organes d'implantation de graines dans le sol et des tuyaux raccordant la tête de distribution aux organes d'implantation. Ce semoir comporte en sus un dispositif de comptage de graines composé d'un dispositif d'alignement et d'un compteur de graines. Le dispositif de comptage de graines comporte, en sus, un dispositif de séparation des graines du flux d'air. Ce dispositif de séparation est constitué par un cyclone. Le cyclone comporte à sa partie supérieure un orifice par lequel s'échappe l'air. Il est prolongé vers le bas par une tubulure à travers laquelle les graines tombent par gravité dans un récipient. Les graines contenues dans ce récipient sont alors alignées au moyen du dispositif d'alignement. En sortie du dispositif d'alignement, les graines sont comptées par le compteur de graines réalisé par une cellule photoélectrique. Le compteur de graines transmet le nombre de graines à un terminal qui compare ce nombre avec le nombre de graines à semer. Le terminal pilote aussi le dispositif de dosage. Les graines comptées sont ensuite réinjectées dans la trémie.

Le dispositif d'alignement est composé de deux rouleaux. Ces rouleaux sont entraînés en rotation afin d'individualiser les graines à compter. Les graines tombent du récipient sur ces deux rouleaux entraînés en rotation et sont ainsi alignées pour être recensées par la cellule photoélectrique. L'espace entre les deux rouleaux est adaptable à la taille des graines. La réalisation de ce dispositif d'alignement est complexe, notamment parce qu'il existe un mécanisme d'entraînement des deux rouleaux.

Le document DE 101 34 991 décrit un autre dispositif de comptage de graines. Le semoir connu comporte notamment un dispositif d'alignement des graines à compter et un compteur de graines. Le dispositif d'alignement est disposé dans la partie inférieure d'un récipient qui reçoit les graines à compter. Il s'agit d'un disque comportant des trous en périphérie destinés à recevoir les graines. Les graines sont aspirées sur les trous pour être ensuite comptées puis éjectées vers la trémie. Ce dispositif de comptage de graines utilise la technologie connue de la distribution sur les semoirs monograine.

Pour le fonctionnement de ce dispositif de comptage de graines, il faut d'une part entraîner le disque à trous en rotation et d'autre part installer une aspiration sous le disque à trous pour que les graines soient aspirées sur les trous afin d'être comptées. Le disque comporte encore un sélecteur de graines et un éjecteur de graines. Les trous des disques doivent être adaptés aux différents types de graines à compter. La réalisation de ce dispositif de comptage de graines est également compliquée.

On connaît également le semoir du type monograine décrit dans le document EP 1 341 122. Avec un tel semoir monograine, les graines sont déjà individualisées une à une lors du dosage et l'écartement initial entre les graines est conservé par le tuyau qui amène les graines une à une vers l'organe d'implantation. Les graines sont donc comptées une à une par un dispositif de comptage implanté dans le tuyau. Par contre, cette précision a un coût relativement élevé.

Le document DE 35 35 871 décrit également un dispositif de comptage de graines pour un semoir. Ce dispositif est implanté entre le dispositif de dosage et un organe d'implantation de graines dans le sol. Il compte le nombre de graines transporté par un flux d'air avec un compteur de graines adapté. Ce document est muet sur la réalisation de ce dispositif de comptage de graines. Le nombre de graines obtenu est transmis à un terminal qui affiche un résultat en nombre de grains par mètre carré. Le terminal compare aussi le résultat obtenu à la valeur définie de graines à semer. Il commande au besoin un moteur qui règle le dispositif de dosage.

L'obtention du nombre exact de graines, lorsqu'elles sont transportées par un flux d'air jusqu'aux organes d'implantation, nécessite l'emploi de moyens de haute résolution pour obtenir un résultat fiable. Il est tout à fait possible avec un débit de graines élevé que plusieurs graines passent en même temps devant le compteur de graines et qu'une seule soit comptée. Un tel compteur de graines n'est donc pas très précis et est en sus relativement coûteux.

Un autre système décrit dans la brochure « Nouveauté 2003 2004 » d'Amazone, pages 20-21 permet de compter les graines directement dans la conduite d'acheminement des graines. Ce système donne le nombre de graines pendant l'opération de semis. Ainsi une régulation peut être effectuée à tout moment. Il utilise pour cela une combinaison d'un capteur optique, d'un capteur capacitif et d'un système électronique d'exploitation. Le système d'exploitation est un terminal qui compare le nombre de graines comptées au nombre de graines à semer.

Le comptage des graines dans le tuyau d'acheminement lorsqu'elles sont transportées par le flux d'air n'est pas très fiable non plus.

Il est encore connu par le document DE 100 37 713 un dispositif de régulation associé à une cellule photoélectrique pour compter le nombre de graines à la sortie d'un mécanisme de dosage.

La présente invention a pour but de remédier aux inconvénients précités. Elle doit notamment proposer un dispositif de comptage de graines simple, économique et facilement utilisable pour toutes sortes de graines habituellement semées par les agriculteurs, tout en garantissant une bonne précision.

A cet effet, une importante caractéristique de l'invention consiste en ce que ledit dispositif d'alignement des graines à compter est constitué par une suite d'éléments de guidage inclinés l'un vers son suivant et sur lesquels glissent lesdites graines à compter.

D'autres caractéristiques et avantages de l'invention ressortiront de la description qui va suivre et qui se réfère aux dessins annexés qui représentent, à titre d'exemples non limitatifs, quelques formes de réalisation de l'invention. Dans ces dessins :
- la **figure 1** représente une vue latérale d'un semoir comportant un dispositif de comptage de graines conforme à l'invention,
- la **figure 2** représente, à plus grande échelle, un exemple de réalisation d'un dispositif de comptage de graines disposé sur un tuyau raccordant indirectement ledit dispositif de dosage à un organe d'implantation de graines dans le sol,
- la **figure 3** représente selon un autre exemple de réalisation dans lequel un dispositif de comptage de graines est disposé sur un tuyau raccordant ledit dispositif de dosage à un organe d'implantation de graines dans le sol,
- la **figure 4** représente selon un autre exemple de réalisation dans lequel un dispositif de comptage de graines est disposé directement en amont d'un organe d'implantation de graines dans le sol, et
- la **figure 5** représente selon un autre exemple de réalisation dans lequel un dispositif de comptage de graines est disposé au moins partiellement dans un organe d'implantation de graines dans le sol.

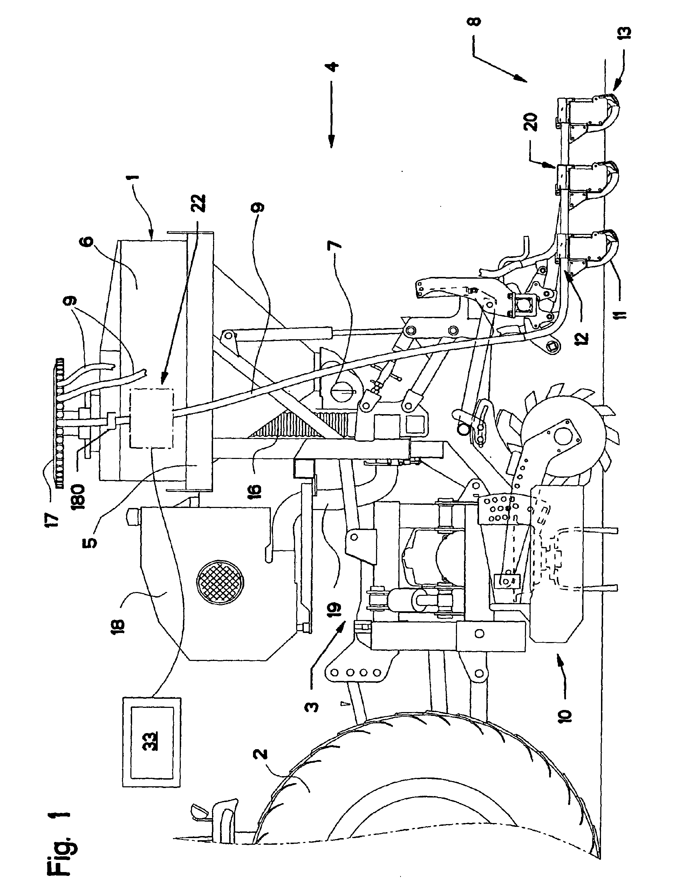

La machine agricole de travail du sol représentée sur les figures comprend notamment un semoir (1). Il s'agit plus précisément d'un semoir du type en lignes comme représenté à la figure 1. Ce semoir (1) est, d'une manière non limitative, lié à un appareil de préparation du lit de semence par exemple une herse rotative (10) par l'intermédiaire d'un dispositif d'attelage trois points (3) connu de l'homme du métier. Cette combinaison permettra de préparer le lit de semence et de semer en une seule passe. La herse rotative (10) est alors placée entre le tracteur (2) et le semoir (1). Le semoir (1) est ainsi déplacé suivant une direction et un sens d'avance indiqué par la flèche (4) dans un champ à ensemencer. Dans la suite de la description, les notions "avant" et "arrière", "devant" et "derrière" sont définies par rapport au sens d'avance (4) et les notions "droite" et "gauche" sont définies en regardant ledit semoir (1) de l'arrière dans ledit sens d'avance (4).

Ce semoir (1) peut également être directement attelé à un tracteur (2). Cet exemple de réalisation n'est pas représenté sur les figures.

Le semoir (1) de la figure 1 comporte un bâti (5) qui est relié à l'appareil de préparation du lit de semence. Ce bâti (5) porte une trémie (6) contenant des graines à semer. Cette trémie (6) comporte à sa base un dispositif de dosage (7) des graines. Le dispositif de dosage (7) permet de régler précisément la quantité de graines à déposer dans le sol. Les graines contenues dans la trémie (6) sont transportées jusqu'à des organes d'implantation (8) au moyen de tuyaux (9).

Chaque organe d'implantation (8) est formé par un corps creux en forme de tube de section rectangulaire. Sa face avant et sa base comportent une pièce effilée (11) de manière à pouvoir ouvrir une petite tranchée dans la terre. La partie supérieure de chaque organe d'implantation (8) possède un orifice d'entrée (12) qui est relié à un tuyau (9) et par lequel arrivent les graines. La partie inférieure de chaque organe d'implantation (8) possède un orifice de sortie (13) par lequel lesdites graines sont implantées dans le sol. L'organe d'implantation (8) comporte dans cette réalisation, mais de manière non limitative, un dispositif de régulation (14) qui assure un espacement sensiblement constant entre les graines sortant de l'orifice de sortie (13). Ce dispositif de régulation (14) est disposé dans le corps. Il comporte des chutes (15) inclinées l'une vers sa suivante depuis l'orifice d'entrée (12) jusqu'à l'orifice de sortie (13). Lesdites chutes (15) sont disposées avantageusement en zigzag.

Les graines qui arrivent par le tuyau (9) glissent, sous l'effet de leur propre poids, sur lesdites chutes (15) en vue d'obtenir une régularité de dépose desdites graines dans le sillon dans le sens longitudinal, c'est-à-dire selon la direction d'avance (4), et en profondeur. Le dispositif de régulation (14) est avantageusement interchangeable, ce qui permet de l'adapter aux familles de graines à semer. Un tel dispositif de régulation (14) est connu de l'homme du métier et ne sera donc pas décrit plus en détail.

Dans l'exemple de réalisation de la figure 1, le semoir (1) est de type pneumatique. Le dispositif de dosage (7) des graines communique avec une colonne d'alimentation (16) qui débouche dans une tête de distribution (17) de laquelle partent les tuyaux (9) menant aux organes d'implantation (8) des graines qui sont disposés à l'arrière sur toute la largeur de la machine. Ces organes d'implantation (8) se situent, de manière non limitative, sur trois rangs et sont espacés de telle sorte qu'il y a des intervalles assez réguliers entre les lignes sur lesquelles sont déposées les graines. Le bâti (5) du semoir (1) porte en plus un générateur (18) qui produit un flux d'air destiné à véhiculer les graines à semer. Celui-ci est amené à l'aide d'un conduit (19) à la base de la colonne d'alimentation (16). Ce flux d'air entraîne alors les graines en provenance du dispositif de dosage (7) jusqu'à la tête de distribution (17) dans laquelle il se divise en plusieurs flux qui s'engagent avec des graines dans les tuyaux (9).

Chaque organe d'implantation (8) comporte en sus, après l'orifice d'entrée (12) et la première chute (15), un dispositif de séparation (20) desdites graines du flux d'air les transportant. Ce dispositif de séparation (20) est par exemple une grille (21) au travers de laquelle s'échappe ledit flux d'air. Cette grille (21) présente des mailles dont les dimensions sont inférieures à celles des graines de sorte que ces dernières soient retenues à l'intérieur de l'organe d'implantation (8). Ladite grille (21) est située sensiblement dans le prolongement dudit orifice d'entrée (12). Ainsi le flux d'air s'échappe et les graines tombent dans le dispositif de régulation (14).

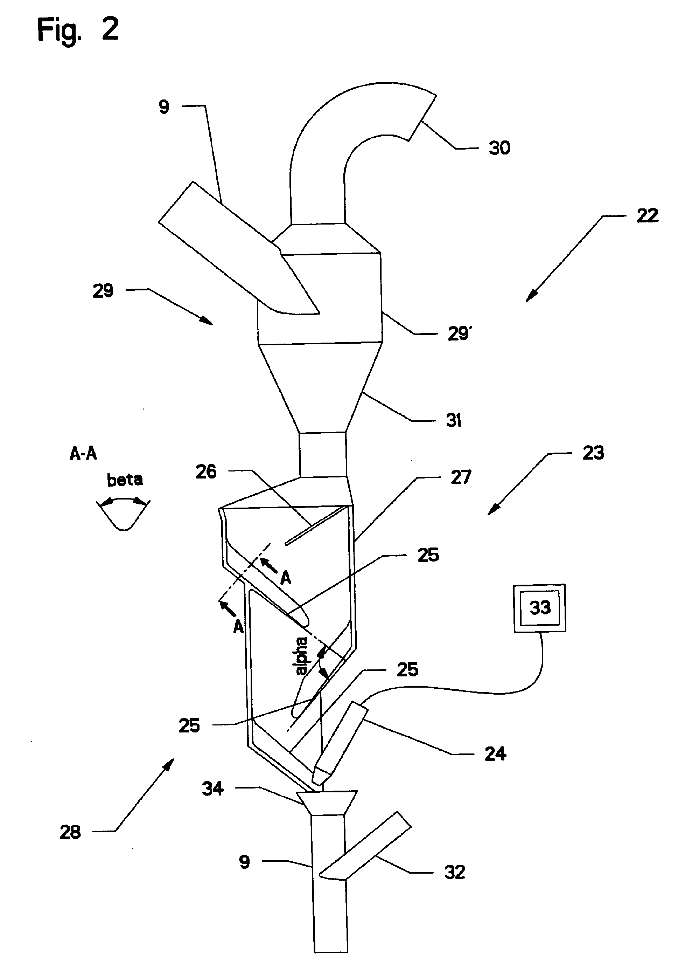

Le semoir (1) selon l'invention comporte un dispositif de comptage de graines (22). Ce dernier est représenté schématiquement avec un cadre en traits mixtes sur la figure 1. Ce dispositif de comptage de graines (22) est ici branché sur l'un des tuyaux (9) conduisant à un organe d'implantation (8) correspondant. Les figures 2 à 5 sont des représentations schématiques de divers exemples de réalisation d'un dispositif de comptage de graines (22) adapté à un semoir spécifique et branché à différents endroits sur le semoir. Ce dispositif de comptage de graines (22) doit permettre, d'une manière relativement simple, d'obtenir le nombre de graines semées. Il comporte, à cet effet, un dispositif d'alignement des graines (23) et un compteur de graines (24). Le dispositif d'alignement (23) permet notamment d'aligner les graines les unes derrière les autres pour qu'un compteur de graines (24) standard puisse les repérer et les compter. Le compteur de graines (24) est donc disposé en aval dudit dispositif d'alignement (23).

Selon une importante caractéristique de la présente invention, le dispositif d'alignement (23) des graines à compter est constitué par une suite d'éléments de guidage (25) inclinés l'un vers son suivant et sur lesquels glissent les graines à compter de manière à les aligner. D'une manière avantageuse, deux éléments de guidage (25) consécutifs forment entre eux un angle (alpha) compris entre 60° et 100°. Il varie en fonction du type de graines à semer. Pour aligner les graines, on utilise au moins trois éléments de guidage (25) consécutifs. D'autre part pour un meilleur fonctionnement, une rampe de regroupement (26) est disposée en amont du premier élément de guidage (25). Sa fonction est de réceptionner les graines qui arrivent par le tuyau (9) et d'assurer qu'elles tombent en tête du premier élément de guidage (25). Cette rampe de regroupement (26) présente une section transversale plane.

Les éléments de guidage (25) présentent, quant à eux, avantageusement une forme de gouttières permettant le guidage des graines. Les graines glissent donc d'un élément de guidage (25) vers l'autre pour être alignées en sortie du dernier élément de guidage (25). Lesdites gouttières présentent un profil en V avec un angle d'ouverture (bêta) compris entre 50° et 70°. Un angle d'ouverture (bêta) de 60° donne de très bon résultat de guidage des graines. Le guidage des petites graines est amélioré lorsque les éléments de guidage (25) ont une section transversale en forme de V avec un fond arrondi. Il est important qu'au moins le dernier élément de guidage (25) présente une forme de gouttière.

Comme cela est représenté sur les figures 2 à 4, les différents éléments de guidage (25) du dispositif d'alignement des graines à compter (23) sont regroupés en une pièce unique (27) par exemple sous la forme d'une cassette (28). Cette pièce unique (27) pourrait être avantageusement prévue amovible et interchangeable, ce qui permet d'adapter le dispositif de comptage de graines (22) aux familles de graines à compter.

La cassette (28) représentée à la figure 2 convient plutôt pour le semis de graines de gros diamètre telles que le blé ou l'orge. La cassette (28) comporte trois éléments de guidage (25). Pour ce genre de graines, l'angle (alpha) entre deux éléments de guidage consécutifs est variable. Entre le premier et le deuxième éléments de guidage (25), l'angle (alpha) est voisin de 70° alors que l'angle (alpha) entre le deuxième et le dernier éléments de guidage (25) est sensiblement égal à 90°. De plus le fond de la gouttière de ces éléments de guidage (25) est arrondi.

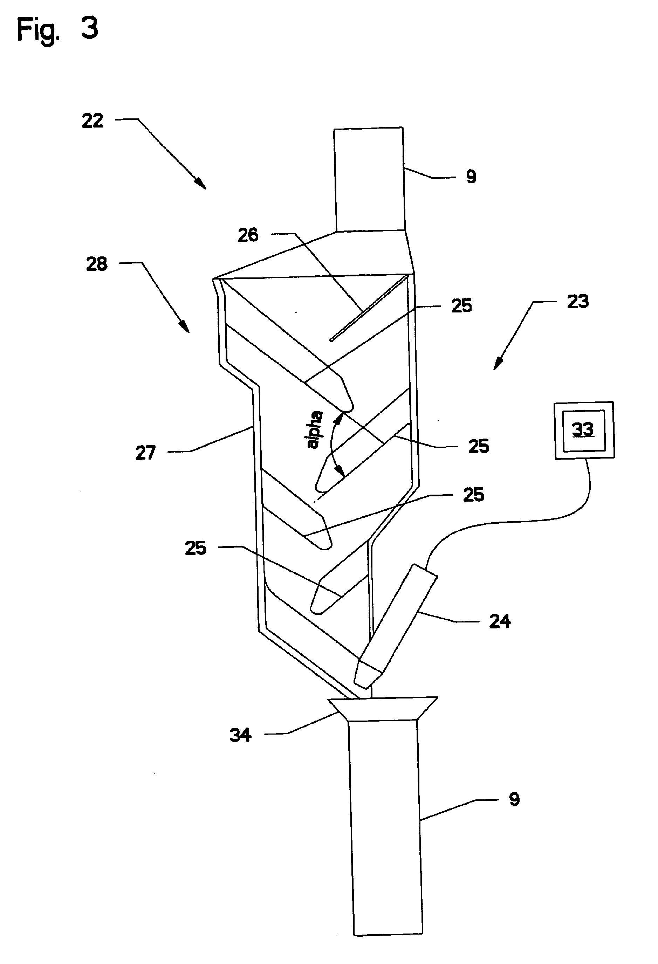

La cassette (28) représentée à la figure 3 est plutôt adaptée pour les graines de petit diamètre. On remarque que cette cassette (28) comporte davantage d'éléments de guidage (25) en forme de gouttières. Ces éléments (25) ont une longueur réduite et n'occupent ainsi qu'une partie de la cassette (28). L'arrondi dans le fond de la forme en V est adapté aux petits diamètres de graines afin de mieux canaliser les graines. Les extrémités de ces éléments de guidage (25) sont disposées plus proches les unes des autres pour éviter le rebondissement des graines lors du passage de l'un à l'autre. L'angle (alpha) entre deux éléments de guidage (25) consécutifs est ici de préférence identique pour tous les éléments de guidage.

Dans l'exemple de réalisation des figures 2 et 3, le dispositif de comptage de graines (22) s'adapte sur un des tuyaux (9). Les graines passant par ledit tuyau (9) entrent dans la cassette (28), glissent sur les éléments de guidage (25) pour être alignées et sont ensuite comptées en sortie par le compteur de graines (24). Ces graines continuent ensuite leur chemin jusqu'à arriver dans le sol. Le dispositif de comptage de graines (22) est implanté sur le tuyau (9) en amont dudit organe d'implantation (8).

La figure 2 représente schématiquement un premier exemple de réalisation de l'invention. Le dispositif de comptage de graines (22) de la figure 2 est adapté pour un semoir (1) du type pneumatique tel que représenté à la figure 1. Au travail, la machine agricole combinée selon la figure 1 est accrochée au tracteur (2) qui permet de la déplacer sur un champ et de l'animer. Les organes d'implantation (8) ouvrent de petits sillons dans la terre dans lesquels se déposent les graines. Celles-ci passent de la trémie (6) dans la colonne d'alimentation (16) en passant par un organe de dosage respectif du dispositif de dosage (7). Dans ladite colonne (16), elles sont entraînées par le flux d'air produit par le générateur (18). Ce flux d'air arrive dans la tête (17) qui assure une distribution vers les tuyaux (9). Dans ces derniers les graines sont emmenées jusqu'aux organes d'implantation (8). Le dispositif de comptage de graines (22) est branché sur un de ces tuyaux (9). Les graines de ce tuyau (9) passent donc d'abord dans le dispositif d'alignement des graines à compter (23) pour être ensuite comptées par le compteur de graines (24) avant de continuer leur progression dans ledit tuyau (9) vers l'organe d'implantation (8) correspondant et être déposées dans le sillon ouvert par cet organe d'implantation (8).

Pour éviter une perturbation de l'écoulement des graines dans le dispositif d'alignement (23), il est avantageux de séparer le flux de graines à compter du flux d'air véhiculant les graines par l'intermédiaire d'un dispositif de séparation du flux d'air (29). Le dispositif de séparation du flux d'air (29) est réalisé par un cyclone (29'). Ce cyclone (29') se situe en amont du dispositif d'alignement (23). Le tuyau (9) avec les graines véhiculées par le flux d'air débouche tangentiellement dans ledit cyclone (29'). Il comporte dans sa partie supérieure un orifice (30) par lequel s'échappe le flux d'air. Le cyclone (29') est prolongé vers le bas par une tubulure (31) à travers laquelle les graines tombent par gravité dans ledit dispositif d'alignement (23). Les graines sont comptées à la sortie via le compteur de graines (24). En aval du dispositif de comptage de graines (22), on récupère les graines via un entonnoir (34) et on injecte à nouveau un flux d'air dans le flux de graines comptées au moyen d'un dispositif d'injection d'air (32). Les graines sont alors transportées jusqu'à l'organe d'implantation (8) correspondant pour être implantées dans la terre. Les graines à compter peuvent être véhiculées par un flux d'air produit par un générateur (180) séparé. Le dispositif d'injection d'air (32) est lié directement audit générateur (180). Mais ce générateur (180) produisant un flux d'air destiné à véhiculer les graines à compter ou les graines déjà comptées peut avantageusement être constitué directement par le générateur (18) produisant un flux d'air destiné à véhiculer les graines à semer. L'alignement des graines en sortie de cassette (28) est optimal pour le compteur de graines (24). Ce dernier transmet le nombre de graines compté à un terminal (33). Il compare le nombre de graines qui a été compté à un nombre de graines à semer par mètre carré par exemple. Le terminal (33) permet également de régler automatiquement, le cas échéant, le dispositif de dosage (7) pour modifier le nombre de graines semées. Le terminal (33) est placé dans la cabine du tracteur (2). Le compteur de graines (24) est réalisé par exemple par une cellule photoélectrique. Il est réalisé en général par un capteur disponible dans le commerce.

Une autre solution pour réinjecter un flux d'air dans le tuyau (9) amenant les graines dans le sol est d'utiliser le flux d'air séparé par le dispositif de séparation (29) pour le réinjecter dans le flux de graines comptées en aval du compteur de graines (24). Un dispositif de réinjection du flux d'air séparé est donc prévu en aval du compteur de graines (24). Cet exemple de réalisation n'est pas représenté sur les figures.

D'autre part, le compteur de graines pourrait très bien être fonctionnel même si le flux de graines à compter n'est pas séparé du flux d'air, car le flux d'air ne perturbe pas vraiment l'alignement des graines, mais plutôt l'espacement entre deux graines successives ce qui n'a pas vraiment une incidence sur le comptage.

Dans l'exemple de réalisation de la figure 3, le dispositif de comptage de graines (22) est prévu sur un des tuyaux (9) d'un semoir mécanique. Pour des semoirs de type mécanique, le transport des graines de la trémie (6) jusqu'auxdits organes d'implantation des graines (8) s'effectue par gravité. Un tel semoir ne comporte donc pas de générateur générant un flux d'air. Les tuyaux (9) sont directement raccordés à un organe doseur du dispositif de dosage (7). Les graines sortant d'un organe doseur tombent par gravité sur la rampe de regroupement (26) puis glissent sur les différents éléments de guidage (25) afin d'être alignées en sortie de la cassette (28). Les graines sont alors comptées par un compteur (24) adéquat et continuent à glisser jusqu'à l'organe d'implantation (8) correspondant. Le dispositif de comptage de graines (22) est disposé de manière que le tuyau (9) débouche verticalement à l'entrée de la cassette (28) de manière à ce que les graines tombent directement sur la rampe de regroupement (26). Les graines en sortie de cassette (28) sont récupérées par un entonnoir (34). La cassette (28) représenté sur la figure 3 est adaptée à aligner des graines de petites tailles.

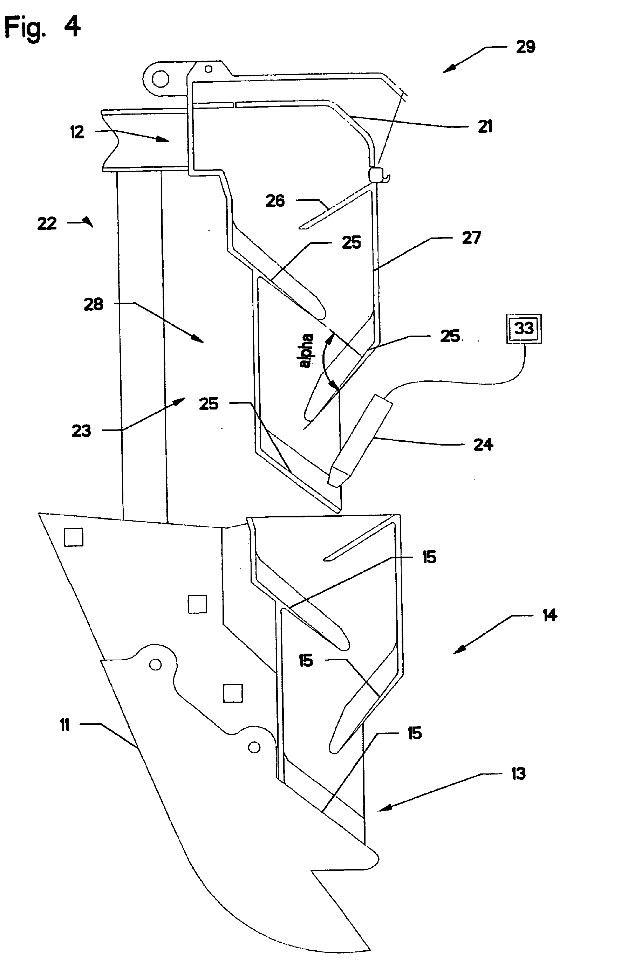

Selon un troisième exemple de réalisation représenté à la figure 4, le dispositif de comptage de graines (22) est implanté directement an amont d'un organe d'implantation (8). Ce troisième exemple montre un dispositif de comptage de graines (22) adapté pour un semoir pneumatique. Il comporte un dispositif de séparation du flux d'air (20) du flux de graines à compter. Il est réalisé sous la forme d'une grille (21). Le flux de graines arrive de manière transversale par rapport à la cassette (28). Les graines butent contre la grille (21) qui laisse passer le flux d'air mais retient les graines qui tombent sous l'effet de leur propre poids dans le dispositif d'alignement (23). Elles tombent sur la rampe de regroupement (26) puis glissent d'un élément de guidage (25) dans le suivant jusqu'à la sortie où elles sont comptées. Les graines comptées tombent alors directement sur les chutes (15) du dispositif de régulation (14) implanté dans l'organe d'implantation (8) correspondant pour arriver dans le sol. Elles arrivent ainsi à des intervalles constants et à faible vitesse. Cela évite qu'elles roulent encore sur le sol et permet d'obtenir d'une manière simple un semis régulier.

Cette troisième réalisation est simple car elle ne nécessite pas de réinjection d'air dans un tuyau (9). Par ailleurs le dispositif de comptage de graines (22) est ainsi placé relativement proche du sol et a donc une influence moindre sur l'opération de semis.

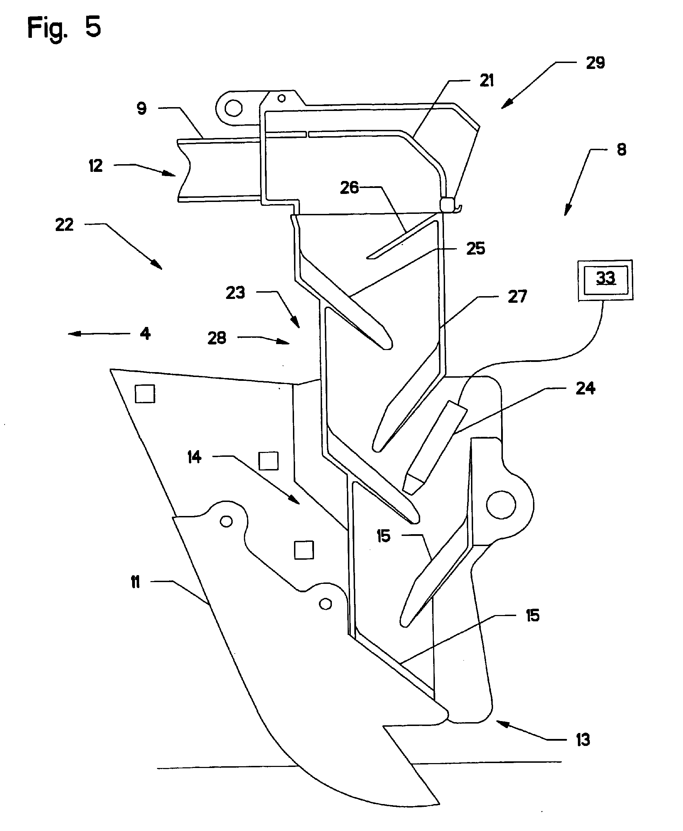

D'après un quatrième exemple de réalisation représenté à la figure 5, le dispositif de comptage de graines (22) est avantageusement placé au moins partiellement dans un organe d'implantation (8). En fait, lesdits éléments de guidage (25) du dispositif d'alignement des graines à compter (23) sont ici au moins partiellement constituées par lesdites chutes (15) de l'un au moins desdits dispositifs de régulation (14). Ce quatrième exemple permet donc de réduire notamment la hauteur additionnée du dispositif de comptage de graines (22) et du dispositif de régulation (14). Il est conçu pour être monté sur un semoir pneumatique. Le flux de graines arrive également de manière transversale pour évacuer le flux d'air au travers de la grille (21). D'une manière particulièrement avantageuse, on ajoute aux chutes (15) au moins un élément de guidage (25) et une rampe de regroupement (26). Ceci permet de disposer le compteur de graines (24) sur la première chute (15), les graines étant déjà alignées à ce stade. Un autre avantage de l'implantation du compteur de graines dans la cassette (28) est de le protéger des agressions extérieures dues principalement à la terre pouvant être projetée.

Pour les quatre exemples de réalisation décrits ci-avant, on implante au moins un dispositif de comptage de graines (22) sur l'un des tuyaux (9). Ceci permet avantageusement de contrôler en continu et/ou de modifier, pendant l'opération de semis le nombre de graines à semer, la modulation de dose pouvant par exemple être commandée à partir de données GPS ou DGPS.

Selon un autre exemple de réalisation non représenté, le semoir (1) comporte une vanne « 2 voies » montée entre la colonne d'alimentation (16) et un organe de dosage respectif d'une tête de distribution (17). Ladite vanne « 2 voies » permettant dans une position le véhiculage des graines sortant dudit organe de dosage vers ladite colonne d'alimentation (16) et dans l'autre position, le véhiculage des graines dudit organe de dosage vers le dispositif de comptage de graines (22). Cette vanne étant commandée par le terminal (33). Cet exemple de réalisation permet donc uniquement de compter les graines avant de débuter l'opération de semis et/ou pendant les manoeuvres en bout de champ, car les graines sont soit dirigées vers la tête de distribution (17) pour être semées, soit vers le compteur de graines (24) pour être comptées. Un contrôle continu du nombre de graines durant l'opération de semis n'est donc pas possible mais cette procédure peut souvent être suffisante pour régler correctement le dispositif de dosage (7).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection défini par les revendications.

## Revendications

1. Semoir (1) comportant entre autres :
- une trémie (6) contenant des graines à semer ;
- un dispositif de dosage (7) permettant de régler la quantité de graines à déposer dans le sol ;
- au moins un organe d'implantation de graines (8) dans le sol ;
- un tuyau (9) raccordant directement ou indirectement ledit dispositif de dosage (7) à l'organe d'implantation (8) respectif ; et
- un dispositif de comptage de graines (22) comportant notamment un dispositif d'alignement (23) des graines à compter et un compteur de graines (24) disposé en aval dudit dispositif d'alignement (23) des graines à compter,
***caractérisé par le fait* que** ledit dispositif d'alignement (23) des graines à compter est constitué par une suite d'éléments de guidage (25) inclinés l'un vers son suivant et sur lesquels glissent lesdites graines à compter.

2. Semoir selon la revendication 1, ***caractérisé par le fait* que** deux éléments de guidage consécutifs (25) forment entre eux un angle (alpha) compris entre 60° et 100°.

3. Semoir selon la revendication 1 ou 2, ***caractérisé par le fait* que** le nombre d'éléments de guidage (25) est au moins de 3.

4. Semoir selon l'une quelconque des revendications 1 à *3, caraetérisé par le fait* qu'au moins le dernier élément de guidage (25) avant ledit compteur de graines (24) est réalisé sous forme de gouttière.

5. Semoir selon la revendication 4, ***caractérisé par le fait* que** tous les éléments de guidage (25) sont réalisés sous forme de gouttière.

6. Semoir selon la revendication 4 ou 5, ***caractérisé par le fait* que** ladite gouttière présente un profil en V d'angle (bêta) compris entre 50° et 70°.

7. Semoir selon la revendication 6, ***caractérisé par le fait* que** le fond du profil en V est arrondi.

8. Semoir selon l'une quelconque des revendications 1 à 7, ***caractérisé par le fait* que** lesdits éléments de guidage (25) sont regroupés en une pièce unique (27).

9. Semoir selon la revendication 8, ***caractérisé par le fait* que** ladite pièce unique (27) regroupant les éléments de guidage (25) est une cassette (28).

10. Semoir selon la revendication 8 ou 9, ***caractérisé par le fait* que** ladite pièce unique (27) regroupant les éléments de guidage (25) est amovible.

11. Semoir selon l'une quelconque des revendications 1 à 5, ***caractérisé par le fait* que** ledit dispositif de comptage (22) des graines est prévu sur l'un des tuyaux (9).

12. Semoir selon la revendication 6, ***caractérisé par* le *fait* que** le dispositif de comptage (22) des graines est prévu directement en amont de l'organe d'implantation (8) respectif.

13. Semoir selon l'une quelconque des revendications 1 à 5, ***caractérisé par le fait* que** le dispositif de comptage (22) des graines est prévu directement dans l'un au moins des organes d'implantation (8).

14. Semoir selon la revendication 13, ***caractérisé par le fait* que** les organes d'implantation (8) comportent chacun, d'une manière connue en soi, des chutes (15) inclinées l'une vers sa suivante et sur lesquelles glissent les graines à implanter dans le sol en vue d'obtenir une régularité de dépose desdites graines dans le sillon aussi bien dans le sens longitudinal qu'en profondeur, et que lesdits éléments de guidage (25) du dispositif d'alignement (23) des graines à compter sont disposés en amont desdites chutes (15) de l'un au moins desdits organes d'implantation (8).

15. Semoir selon la revendication 13, ***caractérisé par le fait* que** les organes d'implantation (8) comportent chacun, d'une manière connue en soi, des chutes (15) inclinées l'une vers sa suivante et sur lesquelles glissent les graines à implanter dans le sol en vue d'obtenir une régularité de dépose desdites graines dans le sillon aussi bien dans le sens longitudinal qu'en profondeur, et que lesdits éléments de guidage (25) du dispositif d'alignement (23) des graines à compter sont au moins partiellement constitués par lesdites chutes (15) de l'un au moins desdits organes d'implantation (8).

16. Semoir selon l'une quelconque des revendications 1 à 9, ***caractérisé par le fait* que** le compteur de graines (24) est un compteur du commerce.

17. Semoir selon l'une quelconque des revendications 1 à 8, ***caractérisé par le fait* qu'**il est prévu en sus un terminal (33) qui compare le nombre de graines qui a été compté, à un nombre de graines à semer, et qui règle automatiquement, le cas échéant, le dispositif de dosage (7).

18. Semoir selon l'une quelconque des revendications 1 à 17, ***caractérisé par le fait* qu'**il est prévu un générateur (180) générant un flux d'air destiné à véhiculer les graines à compter, et qu'il est en sus prévu, en amont de la suite d'éléments de guidage (25), un dispositif de séparation du flux d'air (20) séparant le flux d'air du flux de graines à compter.

19. Semoir selon la revendication 18, ***caractérisé par le fait* qu'**il est prévu, en aval du compteur de graines (24), un dispositif de réinjection du flux d'air séparé destiné à réinjecter le flux d'air séparé dans le flux de graines comptées.

20. Semoir selon la revendication 18, ***caractérisé par le fait* qu'**il est prévu, en aval du compteur de graines (24), un dispositif d'injection d'air (32) destiné à injecter de l'air dans le flux de graines comptées.

21. Semoir selon l'une quelconque des revendications 18 à 20, ***caractérisé par le fait* que** ledit semoir (1) est un semoir pneumatique comprenant en sus, de manière connue en soi, un générateur (18) générant un flux d'air destiné à véhiculer les graines à semer, et au moins une tête de distribution (17) alimentée par un organe de dosage respectif du dispositif de dosage (7) au travers d'une colonne d'alimentation (16) correspondante.

22. Semoir selon la revendication 18, ***caractérisé par le fait* que** le générateur (180) générant un flux d'air destiné à véhiculer les graines à compter est constitué par le générateur (18) générant un flux d'air destiné à véhiculer les graines à semer.

23. Semoir selon la revendication 21 ou 22, ***caractérisé par le fait* qu'**entre la colonne d'alimentation (16) et l'organe de dosage respectifs d'une tête de distribution (17) est prévue une vanne «2 voies» permettant, dans une position, le véhiculage des graines sortant dudit organe de dosage vers ladite colonne d'alimentation (16) et, dans l'autre position, le véhiculage des graines dudit organe de dosage vers le dispositif de comptage des graines (22).

24. Semoir selon la revendication 23 et la revendication 17, ***caractérisé par le fait* que** le pilotage de ladite vanne « 2 voies » est commandé par ledit terminal (33).

## Claims

1. Seeder (1) comprising among other things:
- a hopper (6) containing seeds to be sown;
- a metering device (7) allowing the quantity of seeds deposited in the soil to be adjusted;
- at least one planting element (8) for seeds in the soil;
- a pipe (9) connecting directly or indirectly the said metering device (7) to the respective planting element (8); and
- a seed counting device (22) including in particular an alignment device (23) for the seeds which are to be counted, and a seed counter (24) arranged downstream of the said alignment device (23) for the seeds which are to be counted,
***characterized in* that** the said alignment device (23) for the seeds which are to be counted is constituted by a series of guiding elements (25), inclined one towards the next, and on which the said seeds which are to be counted slide.

2. Seeder according to Claim 1, ***characterized in* that** two consecutive guiding elements (25) form between them an angle (alpha) comprised between 60° and 100°.

3. Seeder according to claim 1 or 2, ***characterized in* that** the number of guiding elements (25) is at least 3.

4. Seeder according to any one of Claims 1 to 3, ***characterized in* that** at least the last guiding element (25) before the said seed counter (24) is achieved in the form of a gutter.

5. Seeder according to Claim 4, ***characterized in* that** all the guiding elements (25) are achieved in the form of a gutter.

6. Seeder according to Claim 4 or 5, ***characterized in* that** the said gutter has a V-shaped profile with an angle (beta) comprised between 50° and 70°.

7. Seeder according to Claim 6, ***characterized in* that** the base of the V-shaped profile is rounded.

8. Seeder according to any one of Claims 1 to 7, ***characterized in* that** the said guiding elements (25) are grouped together in a single piece (27).

9. Seeder according to Claim 8, ***characterized in* that** the said single piece (27) grouping together the guiding elements (25) is a box (28).

10. Seeder according to Claim 8 or 9, ***characterized in* that** the said single piece (27) grouping together the guiding elements (25) is removable.

11. Seeder according to any one of Claims 1 to 5, ***characterized in* that** the said seed counting device (22) is provided on one of the pipes (9).

12. Seeder according to Claim 6, ***characterized in* that** the seed counting device (22) is provided directly upstream of the respective planting element (8).

13. Seeder according to any one of Claims 1 to 5, ***characterized in* that** the seed counting device (22) is provided directly in one at least of the planting elements (8).

14. Seeder according to Claim 13, ***characterized in* that** the planting elements (8) each comprise, in a manner known per se, chutes (15) inclined one towards the next and on which the seeds which are to be deposited in the soil slide, in order to obtain a regularity of depositing of the said seeds in the furrow, as well in the longitudinal direction as in depth, and that the said guiding elements (25) of the alignment device (23) for the seeds which are to be counted are arranged upstream of the said chutes (15) of one at least of the said planting elements (8).

15. Seeder according to Claim 13, ***characterized in* that** the planting elements (8) each comprise, in a manner known per se, chutes (15) inclined one towards the next and on which the seeds which are to be deposited in the soil slide, in order to obtain a regularity of depositing of the said seeds in the furrow, as well in the longitudinal direction as in depth, and that the said guiding elements (25) of the alignment device (23) of the seeds which are to be counted are at least partially constituted by the said chutes (15) of one at least of the said planting elements (8).

16. Seeder according to any one of Claims 1 to 9, ***characterized in* that** the seed counter (24) is a commercially available counter.

17. Seeder according to any one of Claims 1 to 8, ***characterized in* that** in addition a terminal (33) is provided, which compares the number of seeds which have been counted with a number of seeds which are to be sown, and which automatically adjusts the metering device (7) if applicable.

18. Seeder according to any one of Claims 1 to 17, ***characterized in* that** a generator (180) is provided, generating a flow of air intended to convey the seeds which are to be counted, and **in that** in addition, upstream of the series of guiding elements (25), an air flow separation device (20) is provided, separating the flow of air from the flow of seeds which are to be counted.

19. Seeder according to Claim 18, ***characterized in* that**, downstream of the seed counter (24), a device is provided for the reinjection of the separated air flow, which is intended to reinject the separated air flow in the flow of counted seeds.

20. Seeder according to Claim 18, ***characterized in* that**, downstream of the seed counter (24), an air injection device (32) is provided, intended to inject air in the flow of counted seeds.

21. Seeder according to any one of Claims 18 to 20, ***characterized in* that** the said seeder (1) is a pneumatic seeder comprising in addition, in a manner known per se, a generator (18) generating a flow of air intended to convey the seeds which are to be sown, and at least one distribution head (17) supplied by a respective metering element of the metering device (7) through a corresponding supply column (16).

22. Seeder according to Claim 18, ***characterized in* that** the generator (180) generating a flow of air intended to convey the seeds which are to be counted is constituted by the generator (18) generating a flow of air intended to convey the seeds which are to be sown.

23. Seeder according to Claim 21 or 22, ***characterized in* that** between the respective supply column (16) and the metering element of a distribution head (17) a "two-way" valve is provided, allowing in one position the conveying of the seeds coming out from the said metering element towards the said supply column (16) and, in the other position, the conveying of the seeds of the said metering element towards the seed counting device (22).

24. Seeder according to Claim 23 and Claim 17, ***characterized in* that** the guiding of the said "two-way" valve is controlled by the said terminal (33).

## Patentansprüche

1. Sämaschine (1) mit, unter anderem:
- einem Trichter (6), der Saatgut enthält;
- einer Dosiervorrichtung (7), die es ermöglicht, die Menge der in den Boden abzulegenden Körner einzustellen;
- mindestens einem Element (8) zum Einsetzen der Körner in den Boden;
- einem Rohr (9), das direkt oder indirekt die Dosiervorrichtung (7) mit dem jeweiligen Einsetzelement (8) verbindet; und
- einer Körnerzähleinrichtung (22) mit insbesondere einer Vorrichtung (23) zum Ausrichten der zu zählenden Körner und einem Körnerzähler (24), der stromabwärts zur Vorrichtung (23) zum Ausrichten der zu zählenden Körner angeordnet ist,
***dadurch gekennzeichnet,* dass** die Vorrichtung (23) zum Ausrichten der zu zählenden Körner von einer Reihe von in Folge zueinander geneigten Führungselementen (25) gebildet ist, auf die die zu zählenden Körner gleiten.

2. Sämaschine nach Anspruch 1, ***dadurch gekennzeichnet,* dass** zwei aufeinander folgende Führungselemente (25) zwischen sich einen Winkel (Alpha) zwischen 60° und 100° bilden.

3. Sämaschine nach Anspruch 1 oder 2, ***dadurch gekennzeichnet,* dass** die Anzahl von Führungselementen (25) mindestens gleich 3 ist.

4. Sämaschine nach irgend einem der Ansprüche 1 bis 3, ***dadurch gekennzeichnet,* dass** mindestens das letzte Führungselement (25) vor dem Körnerzähler (24) in Form einer Rinne ausgeführt ist.

5. Sämaschine nach Anspruch 4, ***dadurch gekennzeichnet,* dass** alle Führungselemente (25) in Form einer Rinne ausgeführt sind.

6. Sämaschine nach Anspruch 4 oder 5, ***dadurch gekennzeichnet,* dass** die Rinne ein V-Profil mit einem Winkel (Beta) zwischen 50° und 70° aufweist.

7. Sämaschine nach Anspruch 6, ***dadurch gekennzeichnet,* dass** der Boden des V-Profils abgerundet ist.

8. Sämaschine nach irgend einem der Ansprüche 1 bis 7, ***dadurch gekennzeichnet,* dass** die Führungselemente (25) zu einem einzigen Teil (27) zusammengefasst sind.

9. Sämaschine nach Anspruch 8, ***dadurch gekennzeichnet,* dass** der einzige Teil (27), der die Führungselemente (25) vereint, ein Kasten (28) ist.

10. Sämaschine nach Anspruch 8 oder 9, ***dadurch gekennzeichnet,* dass** der einzige Teil (27), der die Führungselemente (25) vereint, abnehmbar ist.

11. Sämaschine nach irgend einem der Ansprüche 1 bis 5, ***dadurch gekennzeichnet,* dass** die Körnerzähleinrichtung (22) auf einem der Rohre (9) vorgesehen ist.

12. Sämaschine nach Anspruch 6, ***dadurch gekennzeichnet,* dass** die Körnerzähleinrichtung (22) direkt stromaufwärts zum jeweiligen Einsetzelement (8) vorgesehen ist.

13. Sämaschine nach irgend einem der Ansprüche 1 bis 5, ***dadurch gekennzeichnet,* dass** die Körnerzähleinrichtung (22) direkt in mindestens einem der Einsetzelemente (8) vorgesehen ist.

14. Sämaschine nach Anspruch 13, ***dadurch gekennzeichnet,* dass** die Einsetzelemente (8) jeweils auf an sich bekannte Weise in Folge zueinander geneigte Gefälle (15) umfassen, auf denen die in den Boden einzusetzenden Körner gleiten, um ein regelmäßiges Ablegen der Körner in der Furche sowohl in Längsrichtung als auch in der Tiefe zu erzielen, und dass die Führungselemente (25) der Vorrichtung (23) zum Ausrichten der zu zählenden Körner stromaufwärts zu den Gefällen (15) mindestens eines der Einsetzelemente (8) angeordnet sind.

15. Sämaschine nach Anspruch 13, ***dadurch gekennzeichnet,* dass** die Einsetzelemente (8) jeweils auf an sich bekannte Weise in Folge zueinander geneigte Gefälle (15) umfassen, auf denen die in den Boden einzusetzenden Körner gleiten, um ein regelmäßiges Ablegen der Körper in der Furche sowohl in Längsrichtung als auch in der Tiefe zu erzielen, und dass die Führungselemente (25) der Vorrichtung (23) zum Ausrichten der zu zählenden Körner zumindest teilweise von den Gefällen (15) mindestens eines der Einsetzelemente (8) gebildet sind.

16. Sämaschine nach irgend einem der Ansprüche 1 bis 9, ***dadurch gekennzeichnet,* dass** der Körnerzähler (24) ein handelsüblicher Zähler ist.

17. Sämaschine nach irgend einem der Ansprüche 1 bis 8, ***dadurch gekennzeichnet,* dass** zusätzlich ein Terminal (33) vorgesehen ist, der die gezählte Anzahl von Körnern mit einer zu säenden Anzahl von Körnern vergleicht und gegebenenfalls die Dosiervorrichtung (7) automatisch einstellt.

18. Sämaschine nach irgend einem der Ansprüche 1 bis 17, ***dadurch gekennzeichnet,* dass** ein Generator (180) vorgesehen ist, der einen Luftstrom erzeugt, der dazu bestimmt ist, die zu zählenden Körner weiterzuleiten, und dass zusätzlich stromaufwärts zur Folge von Führungselementen (25) eine Vorrichtung zur Trennung des Luftstroms (20) vorgesehen ist, die den Luftstrom vom Strom der zu zählenden Körner trennt.

19. Sämaschine nach Anspruch 18, ***dadurch gekennzeichnet,* dass** stromabwärts zum Körnerzähler (24) eine Vorrichtung zur Wiedereinleitung des abgetrennten Luftstroms vorgesehen ist, die dazu bestimmt ist, den abgetrennten Luftstrom wieder in den Strom von gezählten Körnern einzuleiten.

20. Sämaschine nach Anspruch 18, ***dadurch gekennzeichnet,* dass** stromabwärts zum Körnerzähler (24) eine Vorrichtung zur Einleitung von Luft (32) vorgesehen ist, die dazu bestimmt ist, Luft in den Strom von gezählten Körnern einzuleiten.

21. Sämaschine nach irgend einem der Ansprüche 18 bis 20, ***dadurch gekennzeichnet,* dass** die Sämaschine (1) eine pneumatische Sämaschine ist, die zusätzlich auf an sich bekannte Weise einen Generator (18), der einen Luftstrom erzeugt, der dazu bestimmt ist, die zu säenden Körner weiterzuleiten, und mindestens einen Verteilerkopf (17) umfasst, der von einem jeweiligen Dosierelement der Dosiervorrichtung (7) über eine entsprechende Versorgungssäule (16) versorgt wird.

22. Sämaschine nach Anspruch 18, ***dadurch gekennzeichnet,* dass** der Generator (180), der einen Luftstrom erzeugt, der dazu bestimmt ist, die zu zählenden Körner weiterzuleiten, von dem Generator (18) gebildet ist, der einen Luftstrom erzeugt, der dazu bestimmt ist, die zu säenden Körner weiterzuleiten.

23. Sämaschine nach Anspruch 21 oder 22, ***dadurch gekennzeichnet,* dass** zwischen der jeweiligen Versorgungssäule (16) und dem jeweiligen Dosierelement eines Verteilerkopfes (17) ein Zweiwegeventil vorgesehen ist, das es in einer Position gestattet, die aus dem Dosierelement austretenden Körner zu der Versorgungssäule (16) weiterzuleiten, und in der anderen Position, die Körner von dem Dosierelement zur Körnerzähleinrichtung (22) weiterzuleiten.

24. Sämaschine nach Anspruch 23 und Anspruch 17, ***dadurch gekennzeichnet,* dass** die Steuerung des Zweiwegeventils von dem Terminal (33) geregelt wird.
